Europäisches Patentamt

European Patent Office

Office européen des brevets

(11) Veröffentlichungsnummer: **0 100 810**
A2

## (12) EUROPÄISCHE PATENTANMELDUNG

(21) Anmeldenummer: **82890118.1**

(22) Anmeldetag: **11.08.82**

(51) Int. Cl.³: **F 16 H 1/20**
**F 16 H 1/16**

(30) Priorität: **15.07.82 AT 2771/82**

(43) Veröffentlichungstag der Anmeldung:
**22.02.84 Patentblatt 84/8**

(84) Benannte Vertragsstaaten:
**BE DE FR GB IT SE**

(71) Anmelder: **IGM - Industriegeräte- und
Maschinenfabriks-gesellschaft mbH
Industriezentrum NÖ-Süd Strasse 2a, Halle M8
A-2351 Wiener Neudorf Niederösterreich(AT)**

(72) Erfinder: **Vokurka, Franz
Minorgasse 60
A-1140 Wien(AT)**

(74) Vertreter: **Beer, Otto, Dipl.-Ing. et al,
Lindengasse 8
A-1071 Wien(AT)**

(54) Untersetzungsgetriebe.

(57) Ein Untersetzungsgetriebe weist eine angetriebene, zwei Schnecken (3,3') tragende Schneckenwelle (2) und zwei auf der gleichen Seite der Schneckenwelle (2) angeordnete in die beiden Schnecken (3,3') eingreifende Schneckenräder (5) auf, die mit auf ihren Wellen (6) angeordneten Stirnrädern (7) mit einem auf einer Abtriebswelle (9) angeordneten Stirnrad (8) kämmen. Die beiden Schnecken (3,3') weisen die gleiche Steigung auf und eine der beiden Schnecken (3,3') steht zum Ausgleich eines Getriebespieles unter Federbelastung.

Croydon Printing Company Ltd

- 1 -

## Untersetzungsgetriebe

Die Erfindung bezieht sich auf ein Untersetzungsgetriebe mit einer angetriebenen, zwei Schnecken tragenden Schneckenwelle, mit in die beiden Schnecken eingreifenden Schneckenrädern, mit auf deren Wellen angeordneten Stirnrädern und mit einem in diese eingreifenden, auf einer Abtriebswelle angeordneten Stirnrad.

Bei einem Untersetzungsgetriebe dieser, aus der FR-PS 2 455 221 bekannt gewordenen Art sind die beiden Schneckenräder auf entgegengesetzten Seiten der Schneckenwelle angeordnet, was einen verhältnismäßig aufwendigen Aufbau zur Folge hat. Auch ist bei dem bekannten Untersetzungsgetriebe keine Vorsorge getroffen, um das Auftreten eines Spieles im Getriebe zu verhindern.

Die Erfindung stellt sich die Aufgabe, den Aufbau eines Untersetzungsgetriebes zu vereinfachen und Maßnahmen vorzusehen, durch die ein Spiel im Getriebe beseitigt werden kann. Dies ist besonders wichtig, wenn das Getriebe zum Antrieb von Maschinenteilen bestimmt ist, deren Bewegungsablauf mit größter Genauigkeit vor sich gehen muß. Dies ist z.B. bei Industrierobotern der Fall, wie sie etwa zum automatischen Schweißen eingesetzt werden.

Die gestellte Aufgabe wird erfindungsgemäß dadurch gelöst, daß die beiden Schneckenräder auf der gleichen Seite der Schneckenwelle sowie miteinander fluchtend angeordnet sind, wobei die beiden Schnecken die gleiche und gleichsinnige Steigung aufweisen und wobei die eine der beiden Schnecken zum Ausgleich eines Getriebespieles unter Federbelastung steht. Dabei ist es von besonderem Vorteil, wenn die eine der beiden Schnecken durch eine Tellerfeder, gegebenenfalls einen Tellerfedersatz belastet ist.

Die miteinander fluchtende Anordnung der beiden Schneckenräder auf derselben Seite der Schneckenwelle vereinfacht den Aufbau des Untersetzungsgetriebes, wobei die Fertigung der Schneckenwelle insoferne erleichtert wird, als die beiden Schnecken eine gleiche und gleichsinnige Steigung aufweisen. Bei dem einleitend geschilderten Getriebe gemäß der FR-PS 2 455 221 müssen die beiden Schnecken eine entgegengesetzte Steigung aufweisen. Die erfindungsgemäß vorgesehene Federbelastung der einen der beiden Schnecken schließlich gleicht ein Spiel im Getriebe verläßlich aus und ist baulich in einfacher Weise zu verwirklichen.

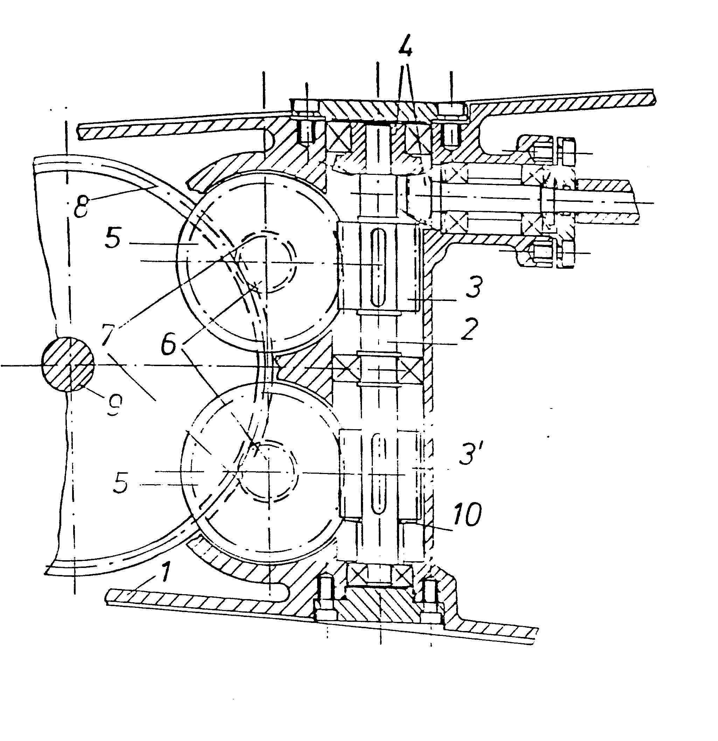

Einzelheiten der Erfindung werden anhand der Zeichnung erläutert, die eine beispielsweise Ausführungsform des erfindungsgemäßen Untersetzungsgetriebes, das z.B. zum Antrieb eines Knickarmrotors bestimmt ist, schematisch in einer teilweise geschnittenen Seitenansicht veranschaulicht.

Gemäß der Zeichnung ist in einem Gehäuse 1 eine Schneckenwelle 2 gelagert, auf der zwei Schnecken 3 und 3' angeordnet sind, die eine gleiche und gleichsinnige Steigung aufweisen. Die Schneckenwelle 2 ist bei dem dargestellten Ausführungsbeispiel über ein Kegelgetriebe 4 angetrieben. In jede der beiden Schnecken 3 und 3' greift ein Schneckenrad 5 ein und die beiden Schneckenräder 5 werden dabei in einem gleichen Drehsinn in Umlauf gesetzt. Die Schneckenräder 5 sitzen auf Wellen 6, die auch Zahnräder 7 tragen. Diese Zahnräder 7 kämmen mit einem Zahnrad 8, das auf einer Abtriebswelle 9 befestigt ist.

Um nun die gewünschte Spielfreiheit des Untersetzungsgetriebes zu gewährleisten, ist die eine Schnecke 3' der beiden Schnecken 3 auf der Welle 2 in Achsrichtung verschiebbar und steht unter Federbelastung, bei dem dargestellten Ausführungsbeispiel, durch eine Tellerfeder 10.

Die dargestellte und beschriebene Ausführungsform dient nur zur Erläuterung des Wesens der Erfindung, ohne diese auf Einzelheiten zu beschränken.

Patentansprüche

1. Untersetzungsgetriebe mit einer angetriebenen, zwei Schnecken (3, 3') tragenden Schneckenwelle (2), mit in die beiden Schnecken 3, 3' eingreifenden Schneckenrädern (5), mit auf deren Wellen 6 angeordneten Stirnrädern 7 und mit einem in diese eingreifenden, auf einer Abtriebswelle 9 angeordneten Stirnrad 8, dadurch gekennzeichnet, daß die beiden Schneckenräder (5) auf der gleichen Seite der Schneckenwelle (2) sowie miteinander fluchtend angeordnet sind, wobei die beiden Schnecken (3) die gleiche und gleichsinnige Steigung aufweisen und wobei die eine der beiden Schnecken (3) zum Ausgleich eines Getreidespieles unter Federbelastung steht.

2. Untersetzungsgetriebe nach Anspruch 1, dadurch gekennzeichnet, daß die eine der beiden Schnecken (3) durch eine Tellerfeder (10), gegebenenfalls einen Tellerfedersatz belastet ist.

Fig. 1